(19) **Europäisches Patentamt / European Patent Office / Office européen des brevets**

(11) **EP 1 530 246 B1**

(12) **EUROPEAN PATENT SPECIFICATION**

(45) Date of publication and mention
of the grant of the patent:
**09.02.2011 Bulletin 2011/06**

(51) Int Cl.:
*H01M 2/26* (2006.01)   *H01M 10/04* (2006.01)

(21) Application number: **04090423.7**

(22) Date of filing: **05.11.2004**

(54) **Laminated battery**

Laminierte Batterie

Batterie laminée

(84) Designated Contracting States:
**DE FR IT**

(30) Priority: **06.11.2003 JP 2003377236**

(43) Date of publication of application:
**11.05.2005 Bulletin 2005/19**

(73) Proprietor: **NEC Corporation
Minato-ku
Tokyo 108-8001 (JP)**

(72) Inventors:
• **Yageta, Hiroshi
Sagamihara-shi
Kanagawa 229-1198 (JP)**

• **Otohata, Makihiro
Sagamihara-shi
Kanagawa 229-1198 (JP)**
• **Mizuta, Masatomo
Sagamihara-shi
Kanagawa 229-1198 (JP)**

(74) Representative: **Wenzel & Kalkoff
Patentanwälte
Meiendorfer Strasse 89
22145 Hamburg (DE)**

(56) References cited:
**EP-A- 1 333 520      CA-A1- 2 384 215
US-A1- 2002 146 620**

# Description

## Field of the Invention:

The present invention relates to a laminated battery in which a battery element having a plurality of positive electrodes and negative electrodes that are laminated with separators interposed is hermetically sealed (hereinafter, described simply as "sealed") by a covering material.

## Description of the Related Art:

Batteries have recently been proposed for the purpose of charging and discharging high currents, these batteries including: battery elements in which a plurality of positive collectors and a plurality of negative collectors that are each composed of metal foil are laminated with separators interposed, a positive electrode lead that is connected to the positive collectors, a negative electrode lead that is connected to the negative collectors, and a covering material for sealing the battery element with a portion of the positive electrode lead and a portion of the negative electrode lead being led out. In order to connect these leads with the battery elements in this type of laminated battery, a portion of the metal foil that is provided to protrude from the laminated positive and negative collectors must be gathered together and connected respectively. As disclosed in Japanese Patent Laid-Open Publication No. 2001-126678, welding, and in particular, ultrasonic welding, is frequently used as the connection method.

Recently, it has been found that batteries that are advantageous in terms of weight and size can be obtained by using a film as the covering material. In nearly all of this type of battery, both the positive and negative electrode leads are led out from one side of the covering material, and the connection points between the metal foil and leads are of course positions that are equally separated from the laminated electrode unit, which is the portion in which the positive collectors, negative collectors, and separators are laminated.

Regarding the collectors, from the standpoint of electrochemical characteristics and cost, aluminum foil is often used in the positive collectors and copper foil is frequently used in the negative collectors in, for example, a lithium ion secondary battery. Because the conductivity of these two materials differs, the aluminum foil is generally made thicker than the copper foil when the two materials are used in combination.

In the above-described laminated battery, the region from the laminated electrode unit to the leads is a portion that does not contribute to charging and discharging. As a result, when considered from the standpoint of improving space efficiency, the portion of connection between the leads and the metal foil is preferably as close as possible to the laminated electrode unit. At the same time, the following factors must also be considered:

As the number of laminations of collectors in the laminated electrode unit increases, the number of layers of metal foil that must be welded in the portion of connection with the leads also increases, and to achieve reliable welding of these parts, the welding device must accordingly be set to a powerful output. In addition, as the thickness of the laminated electrode unit increases, the difference in angle of the metal foil with respect to the leads in the connection unit also increases, and the sharp bend of the metal foil at base of the connection unit tends to cause cracking. In particular, when the total number of layers of positive electrodes and negative electrodes exceeds 30, if welding is carried out with the anvil on the lead side and the horn on the metal foil side in ultrasonic welding, the foil tends to crack at the border of the metal foil and connection unit where an angle occurs with respect to the leads. Thus, as the number of laminations increases, it is desirable that the distance from the laminated electrode unit to the connection unit is increased to ease the angle of the metal foil with respect to the leads.

The position of the connection unit must be designed to achieve a balance between improving space efficiency and dealing with the problem of foil cracking. However, as previously described, positive and negative electrode leads are led out from one side in known laminated batteries of the prior art. When designing the position of the connection units, and thus, when determining the position of the lead-outs, the side, either negative or positive, in which foil cracking tended to occur was taken as the standard, even though this approach detracts from space efficiency. Laminated batteries of prior art include a configuration in which positive-side leads and negative-side leads are led out from opposite sides, but in this case as well, the position of lead-out of leads is designed based on the above-described considerations, and there is no example in the prior art in which the positions of lead-outs were designed independently on the positive side and negative side for the purpose of optimizing space efficiency.

Document EP 1 333 520 discloses a laminated battery with equal lead-out design on the positive side and negative side.

## Summary of the Invention:

The invention is realized in view of the above-described background art, and has as its objects: the reduction of the size of the region that does not contribute to charging and discharging and the improvement of space efficiency while preventing cracking of foil when welding to leads even when using a large number of positive electrode laminations and negative electrode laminations.

As a result of diligent investigation by the inventors of the present invention, it has been found that the border of the area in which bending is difficult in the laminated electrode unit is located at the edges of the negative electrode on the positive electrode lead-out side and at the edges of the positive electrodes on the negative electrode lead-out side, and this finding has led to the invention.

More specifically, the laminated battery of the present invention includes, according to claim 1, a battery element, and a positive electrode lead and a negative electrode lead that are connected to the battery element. The battery element has a structure in which a plurality of positive electrode sheets and a plurality of negative electrode sheets are alternately laminated with interposed separators. The positive electrode sheets are composed of positive electrode collectors in which a positive electrode material is applied to both surfaces, and moreover, in which a portion to which the positive electrode material has not been applied extends from one side. The negative electrode sheets are composed of negative electrode collectors in which a negative electrode material has been applied to both surfaces over an area that is greater than that of the positive electrode material, and moreover, in which a portion to which the negative electrode material has not been applied extends from one side. The positive electrode lead is connected to the ends of stacked portions of the positive electrode sheets to which the positive electrode material has not been applied: The negative electrode lead is connected to the ends of the stacked portions of the negative electrode sheets to which the negative electrode material has not been applied. Further, in the laminated battery of the invention: of the portions of the negative electrode sheets that extend beyond the portions in which the positive electrode material has been applied, at least one portion on the side of the connection unit with the negative electrode lead is curved toward the connection unit; and moreover,

$$c < b$$

where "b" is the spacing from the ends of the portions of said positive electrode sheets to which the positive electrode material has been applied on the side of the connection unit with the positive electrode lead, and "c" is the spacing from the ends of the positive electrode sheets on the side of the connection unit with the negative electrode leads to the connection unit with the negative electrode lead.

This prescription of the spacing from the battery element to the connection units on the positive and negative sides optimizes the dimensions of the portions that do not contribute to charging and discharging. As a result, the size of the portion that does not contribute to charging and discharging can be reduced and the space efficiency can be improved while preventing breaks in the foil when welding to the leads even in the case of a large number of laminations of positive electrode sheets and negative electrode sheets.

In the above-described laminated battery, the value of "c" is preferably:

$$0.8 \, p < c < 1.2 \, p$$

where "p" is the spacing, on the side of the connection unit with the positive electrode lead, from the ends of the negative electrode sheets to the connection unit with the positive electrode lead.

In addition, adopting a configuration in which positive electrode sheets and negative electrode sheets are stacked such that the portions to which the positive electrode material has not been applied and the portions to which the negative electrode material has not been applied extend from opposite sides allows a reduction of the size in the directions of extension of the positive electrode lead and negative electrode lead. Further, in this case, the adoption of a configuration in which: the battery element is vacuum-sealed inside a covering material that is composed of film and in which a cup is formed to form a housing for accommodating the battery element; and moreover, the region of said positive electrode collectors to which the positive electrode material has been applied is arranged with a bias toward the side of the negative electrode lead inside the cup allows the reliable positioning of the region of the battery element that is difficult to deform at the bottom of the cup. As a result, the occurrence of wrinkling in the covering material can be suppressed and a laminated battery of excellent appearance can be obtained.

The above and other objects, features, and advantages of the present invention will become apparent from the following description with reference to the accompanying drawings, which illustrate examples of the invention.

**Brief Description of the Drawings:**

FIG. 1 is an exploded perspective view of a laminated battery according to an embodiment of the invention.

FIG. 2 is a sectional view showing the details of the configuration in the vicinity of the positive electrode junction of the laminated battery that is shown in FIG. 1.

FIG. 3 is a sectional view showing the detailed configuration of the vicinity of the negative electrode junction of the laminated battery that is shown in FIG. 1.

FIG. 4 is a plan view of the laminated battery that is shown in FIG. 1.

## Detailed Description of the Preferred Embodiments:

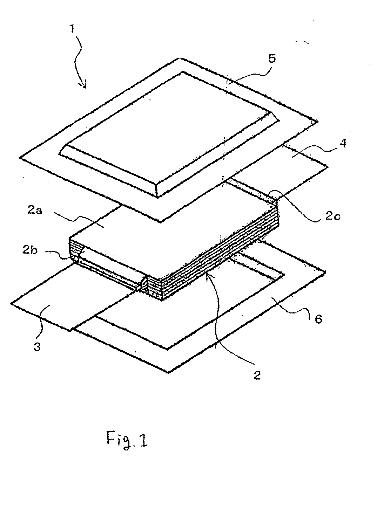

Referring now to FIG. 1, laminated battery 1 according to an embodiment is shown that includes: battery element 2 having an approximately rectangular shape and a configuration in which a plurality of positive electrode sheets and negative electrode sheets are stacked; positive electrode lead 3 and negative electrode lead 4 that are connected to the positive electrode sheets and negative electrode sheets, respectively, of battery element 2; and covering materials 5 and 6 for sealing battery element 2 while allowing a portion of each of positive electrode lead 3 and negative electrode lead 4 to protrude. In this embodiment, laminated battery 1 is assumed to be a lithium-ion secondary battery.

Battery element 2 is composed of a plurality of positive electrode sheets and a plurality of negative electrode sheets that are alternately stacked with interposed separators, and includes laminated electrode unit 2a, which contains an electrolyte and which is the portion in which these components are stacked, and positive electrode junction 2b and negative electrode junction 2c for connecting this laminated electrode unit 2a to positive electrode lead 3 and negative electrode lead 4, respectively. Positive electrode junction 2b and negative electrode junction 2c are portions that extend as a unit from the positive electrode sheets and negative electrode sheets, respectively that are the constituent elements of laminated electrode unit 2a. Positive electrode junction 2b and negative electrode junction 2c extend from opposite sides of battery element 2. In other words, positive electrode lead 3 and negative electrode lead 4 are led out in opposite directions from laminated battery 1. Explanation next regards the details of the construction of battery element 2.

Separators may employ parts in sheet form such as a microporous film made from a thermoplastic resin such as polyolefin, a nonwoven fabric, or woven fabric that can be impregnated with electrolyte.

Covering materials 5 and 6 are two pieces of laminated film that enclose battery element 2 from both sides in the direction of thickness, battery element 2 being sealed by heat-sealing the overlapping edges. In addition, covering materials 5 and 6 are each processed into a cup form having a brim so as to form a housing, which is the space in which battery element 2 is enclosed. This process can be realized by deep-draw forming.

In FIG. 1, an example is shown in which battery element 2 is enclosed by two pieces of covering material 5 and 6 from the two sides in the direction of thickness and then sealed by heat sealing the four edges, but the invention is not limited to this form, and a configuration is also possible in which covering material in the form of a single film is folded in two to enclose battery element 2, and battery element 2 is then sealed by heat-sealing the three open sides.

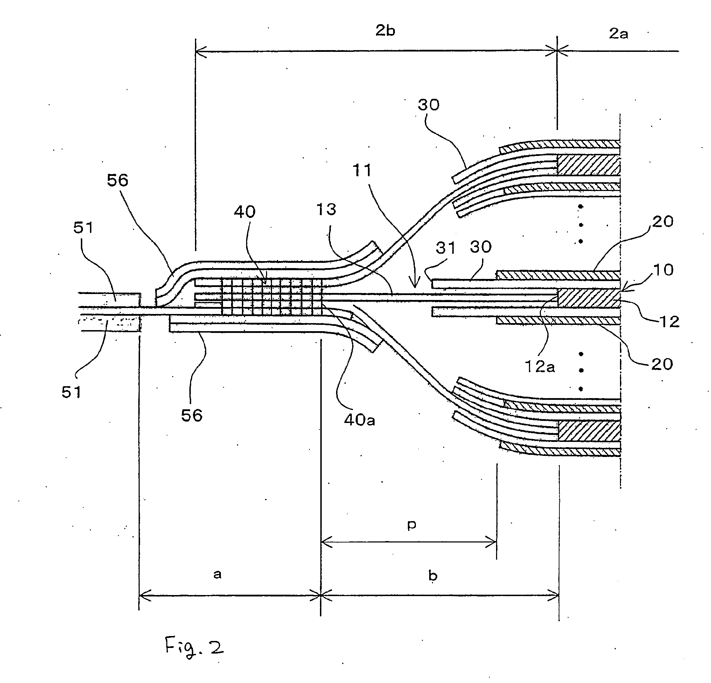

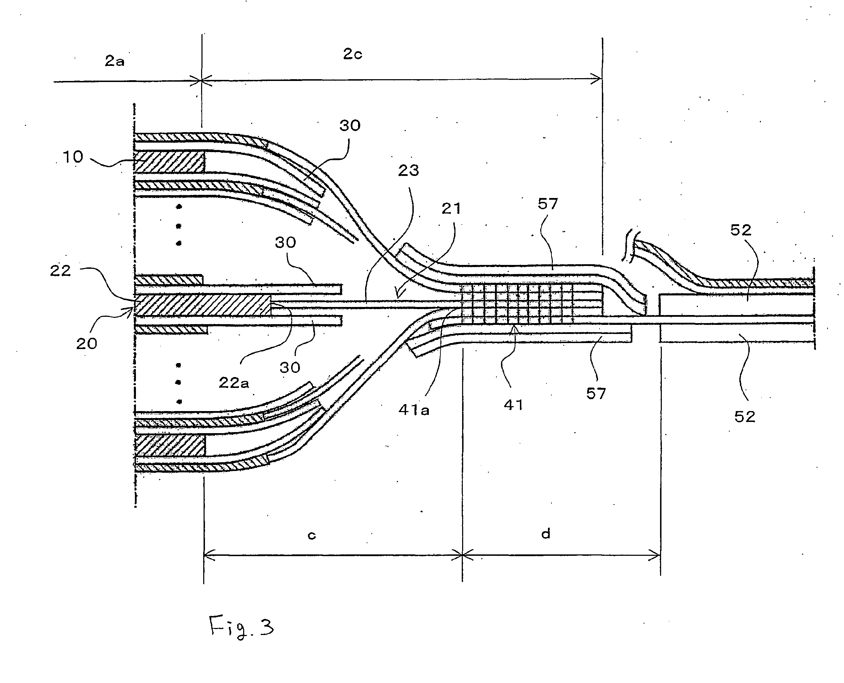

Explanation next regards details of the configuration of the vicinity of positive electrode junction 2b and details of the configuration of the vicinity of negative electrode junction 2c with reference to FIG. 2 and FIG. 3, respectively.

As previously described, the present embodiment assumes the use of a lithium-ion secondary battery, and the area of the portion in which a negative electrode material has been applied on negative electrode sheets is greater than the area of application of positive electrode material on positive electrode sheets. As a result, negative electrode material application edge 22a is positioned more toward the outside than positive electrode material application edge 12a. The amount of protrusion of negative electrode material application edge 22a from positive electrode material application edge 12a is preferably 0.5-2 mm. In addition, to prevent shorts between positive electrode sheets 10 and negative electrode sheets 20, separator ends 31, which are the ends of separators 30, are positioned somewhat more toward the outside than negative electrode material application edge 22a. The amount of protrusion of separator ends 31 from negative electrode material application edge 22a is preferably 0.5-2 mm.

Explanation first regards the details of the configuration on the positive side with reference to FIG. 2.

Positive electrode sheets 10 are composed of aluminum foil and include positive collectors 11 in which a positive electrode material has been applied to the main portions of both surfaces of positive electrode sheets 10. The major portion of positive collector 11 in the region of laminated electrode unit 2a is constituted by positive electrode material applied portion 12 in which a positive electrode material has been applied to the two surfaces. Non-applied portion 13, which is a portion in which positive electrode material is not applied, extends from one side of positive collector 11. Non-applied portions 13 of each positive collector 11 are gathered together in a stacked form on positive electrode lead 3, which is composed of a metal plate, at a position that is a prescribed distance toward the outside from separator ends 31. Non-applied portions 13 are then connected together by welding. In determining the position of connection unit 40 between non-applied portions 13 of these positive collectors 11 and positive electrode lead 3, care must be exercised regarding the following points:

Considering the change in thickness from laminated electrode unit 2a to connection unit 40 in the direction from positive electrode material applied portion 12 of positive electrode sheets 10 toward connection unit 40, the thickness first decreases by the thickness of application of the positive electrode material at the position of positive electrode material application edge 12a. The thickness next decreases by the thickness of negative electrode sheet 20 at negative electrode material application edge 22a, and further decreases by the thickness of separators 30 at separator ends 31. Finally, non-applied portions 13 alone are gathered together over positive electrode lead 3 to arrive at connection unit 40.

Connection unit 40 is thus formed by gathering together positive collectors 11 that had the same spread (spacing) as the thickness of laminated electrode unit 2a and then contact-bonding or welding by ultrasonic welding. As a result, if the position of connection unit 40 is too close to laminated electrode unit 2a, positive collectors 11, which are aluminum foil, are sharply bent at base 40a of connection unit 40 and therefore prone to breaks in the foil. In ultrasonic welding in particular, ultrasonic oscillations are applied while placing the horn to the side of the softer part, and the anvil is therefore usually placed to the side of positive electrode lead 3 and the horn brought to the side of positive collector 11. Foil cracking in positive collectors 11 therefore tends to occur at the border of the horn. To prevent foil breakage, the position of connection unit 40 should be sufficiently separated from laminated electrode unit 2a and the bend of positive collectors 11 thus limited. On the other hand, excessive distance from laminated electrode unit 2a to connection unit 40 leads to an increase in the overall size of the battery and detracts from the efficiency of the cubic volume. The position of connection unit 40 is therefore designed to achieve a balance between reliability against breakage and space efficiency.

Explanation next regards the details of the configuration of the negative electrode side with reference to FIG. 3.

Negative electrode sheets 20 include negative collectors 21 that are composed of copper foil to which negative electrode material has been applied on both surfaces of the major portions. The major portion of negative collectors 21 is negative electrode material applied portion 22 in which negative electrode material has been applied to both surfaces in the area of laminated electrode unit 2a. Non-applied portion 23, which is a portion in which negative electrode material has not been applied, extends from one side of negative collector 21. As previously described, the area of negative electrode material applied portion 22 is greater than the area of positive electrode material applied portion 12 in positive electrode sheets 10, and negative electrode material applied portion 22 therefore completely covers positive electrode material applied portion 12. Non-applied portions 23 are gathered together as a stack at a position that is a prescribed distance toward the outside from separator ends 31 over negative electrode lead 4 that is composed of a metal plate and then connected by welding.

When determining the position of connection unit 41 of non-applied portions 23 of these negative collectors 21 and negative electrode lead 4, the same care must be exercised as on the positive electrode side. In other words, the position of connection unit 41 is designed to achieve a balance between improving the efficiency of use of the cubic volume and solving the problem of foil breakage.

In addition, as shown in FIG. 2, sealant 51 is provided in the area of positive electrode lead 3 in which covering materials 5 and 6 of positive electrode lead 3 are heat-sealed for preventing a drop in the heat sealing characteristics due to the interposition of the metal plate when covering material 5 and 6 is heat-sealed. Similarly, as shown in FIG. 3, sealant 52 is also provided in the area of negative electrode lead 4 in which covering materials 5 and 6 are heat-sealed. Still further, as shown in FIG. 2 and FIG. 3, connection units 40 and 41 on the positive electrode side and negative electrode side are covered by protective films 56 and 57, respectively.

Regarding the positions of each of connection unit 40 on the positive electrode side and connection unit 41 on the negative electrode side, as a result of diligent investigation by the inventors of the present invention, it was found that the positions of connection units 40 and 41 are preferably designed to produce the relation c < b, where "b" is the spacing between positive electrode material application edge 12a and base 40a of connection unit 40 in the direction of lead-out of positive electrode lead 3 in positive electrode junction 2b, and "c" is the spacing between the ends of positive electrode sheets 10 and base 41 a of connection unit 41 in the direction of lead-out of negative electrode lead 4 in negative electrode junction 2c.

For example, according to the thinking of the prior art, positive electrode material applied portion 12 was used as the standard for setting the position of connection unit 40 on the side of positive electrode lead 3 from the border of this positive electrode material applied portion 12 such that foil cracking of positive collectors 11 did not occur during ultrasonic welding. The position of connection unit 41 on the side of negative electrode lead 4 was then also set to the same spacing (the same spacing as the spacing from positive electrode material application edge 12a to base 40a of connection unit 40) that was set for the positive electrode side. However, regarding the position of connection unit 41 such that cracks do not occur in the foil of negative collectors 21, it was found that there is more margin in the direction that approaches laminated electrode unit 2a, and that the size from laminated electrode unit 2a to connection unit 41 on the negative electrode side (the size of negative electrode junction 2c) can be correspondingly reduced for an increase in space efficiency.

In particular, in a lithium-ion secondary battery in which the positive electrode lead and negative electrode lead are led out in opposite directions as in the present embodiment, the optimal design of the positions of connection units 40 and 41 allows a reduction of the size of the covering materials in the directions of lead-out of the leads and thus produces a significant effect. In this connection, bringing the connection unit on the negative electrode side closer to the laminated electrode unit also enables a reduction of the cubic volume of the negative electrode junction in a laminated battery having a configuration in which the positive electrode lead and negative electrode lead are led out from a single side, and although this arrangement causes a variation in the outer form of lead-out portion of the lead on the positive electrode side and the lead-out portion of the lead on the negative electrode side, it allows an inside reduction equal in size to the covering materials in the lead-out portion of the lead on the negative electrode side.

The following reasons can be considered for the above-described difference in the optimum positions of the connection units on the positive electrode side and negative electrode side:

1. Difference in the thicknesses of the collectors in the positive electrode and the negative electrode
As previously described, in a lithium-ion secondary battery, negative collectors 21 employ a thinner metal foil than the positive collectors 11, and the collectors on the negative electrode side are therefore easier to bend than the collectors on the positive electrode side. Connection unit 41 is therefore correspondingly easier to bring closer to the laminated electrode unit.

2. Difference in the thickness of application of the negative electrode material on the positive electrode lead side and the negative electrode lead side

In FIG. 2, negative electrode material application edge 22a on the side of positive electrode junction 2b is well defined because negative collector 21 to which negative electrode material has been applied is cut from above the applied film. On the negative electrode lead 4 side, however, when the negative electrode compound is applied to negative collector 21 by a doctor blade method, the edge of the applied portion is formed by stopping the flow of the negative electrode compound with a shutter. As a result, the thickness of the edge of negative electrode material applied portion 22 does not change in sharp steps. Instead, the edge of the applied film has a tapered form with a skirt section of typically 0.5-2 mm. Thus, in the 0.5-2-mm portion that protrudes from the edge of positive electrode sheet 10 in FIG. 3, the thickness of negative electrode sheet 20 tends to be thin. Regarding the edge of negative electrode sheet 20 in the positive electrode lead 3 side in FIG. 2, a negative electrode material film of prescribed thickness is formed as far as the edge and is therefore difficult to bend. On the other hand, negative electrode material applied portion 22 in the area that protrudes beyond positive electrode sheet 10 in FIG. 3 is easier to bend than the end of negative electrode sheet 20 on the positive electrode lead 3 side due to the reasons described above.

As a result, when negative collectors 21 on the negative electrode lead 4 side are gathered toward connection unit 41 and welded, negative electrode material applied portion 22 that is immediately outside positive electrode sheet 10 curves toward connection unit 41. In addition, even when the battery element 2 is sealed by covering materials 5 and 6 in a reduced-pressure atmosphere, negative electrode sheets 20 are pressed by covering materials 5 and 6 due to the atmospheric pressure when the battery is returned to atmospheric pressure after sealing. As a result, immediately beyond positive electrode sheets 10, negative electrode material applied portion 22 bends toward the position of height of connection unit 41 in the direction of the thickness of battery element 2.

3. Difference in the laminated configuration on the positive electrode lead side and negative electrode lead side

As shown in FIG. 2, separators 30 and non-applied portions 13 of positive collectors 11 are interposed between negative electrode sheets 20 at the ends of negative electrode sheets 20 on the positive electrode lead 3 side. In contrast, as shown in FIG. 3, in the area in which negative electrode material applied portion 22 protrudes beyond positive electrode sheets 10 on the negative electrode lead 4 side, no components are interposed between negative electrode sheets 20 other than separators 30. Separators 30 are formed from thin resin film and therefore bend easily. The ends of positive electrode sheets 10 therefore have large steps on the negative electrode lead 4 side and are easy to bend.

Due to the above-described reasons, the border of the area in which the constituent parts of laminated electrode unit 2a are difficult to bend tends to be at the edges of negative electrode sheets 20 on the positive electrode lead 3 side, and at the edges of positive electrode sheets 10 on the negative electrode lead 4 side. In addition, when the sealing of the battery element by covering materials 5 and 6 having the form of film is carried out in a reduced-pressure atmosphere, negative electrode sheets 20 are pressed by covering materials 5 and 6 due to atmospheric pressure when the battery is returned to atmospheric pressure after sealing. The border of the flat portion of the outer form of the battery at this time also tends to be located at the same position as the position described above.

The optimum positions of connection units 40 and 41 can be found if the dimensions of the position of connection unit 40 from the edges of negative electrode sheets 20 on the positive electrode lead 3 side and the position of connection unit 41 from the edges of positive electrode sheets 10 on the negative electrode lead 4 side are each taken as a standard and then designed such that foil cracking does not occur. In the case of a lithium-ion secondary battery, the area of application of the negative electrode material is typically greater than the area of application of the positive electrode material. If design is implemented according to the above-described guiding principles, the relation $c < b$ will inevitably result. Even in cases of a large number of laminations of positive electrode sheets 10 and negative electrode sheets 20, such as a total of 30 or more, the size of the area beyond laminated electrode unit 2a that contributes to charging and discharging can be reduced and the space efficiency can be improved while still enabling prevention of the occurrence of foil breakage in positive collectors 11 and negative collectors 21.

The positions of connection units 40 and 41 can be designed optimally if the spacing "p" in FIG. 2 is preferably substantially the same dimension as spacing "c" that is shown in FIG. 3, where "p" is the spacing in the lead-out direction of positive electrode lead 3 between the edges of negative electrode sheets 20 and base 40a of connection unit 40 in positive electrode junction 2b.

Spacing "p" need not be exactly the same as spacing "c" but can be adjusted within the range in which the above-described effect can be obtained. More specifically, when the dimension of "c" is designed by taking as a standard the dimension on the positive electrode lead 3 side in which foil breakage tends to occur, the possibility of foil breakage increases when "c" is 0.8 p or less, and the desired space efficiency effect becomes difficult to achieve when "c" is 1.2 p or more. Accordingly, the effects of the present invention can be obtained when "c" is within the range:

$$0.8\,p < c < 1.2\,p.$$

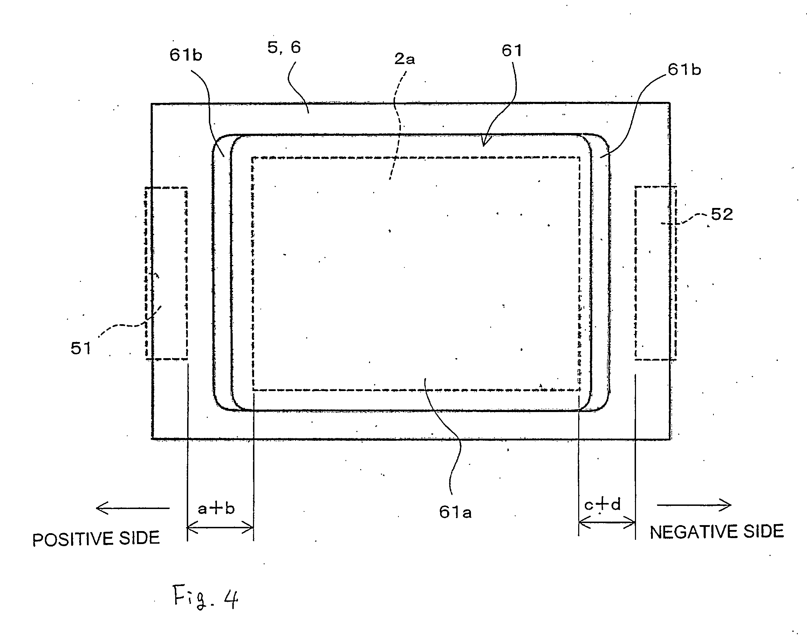

In FIG. 4, the preferable estimated position for accommodating the battery element and the preferable estimated position of lead-sealing sealant with respect to the covering material are shown by dotted lines. The position of cup 61 for the housing of battery element 2 is symmetrical on the positive electrode side and negative electrode side with respect to the outer shape of covering 5 and 6. The positional relations of sealant 51 and 52 with respect to laminated electrode unit 2a differ for the positive electrode side and negative electrode side, c+d being smaller than a+b in FIG. 4. Here, "b" and "c" indicate the previously described spacing. In addition, as shown in FIG. 2, "a" is the spacing from base 40a of connection unit 40 to sealant 51 on the positive electrode lead 3 side, and as shown in FIG. 3, "d" is the spacing from base 41 a of connection unit 41 to sealant 52 on the negative electrode lead 4 side.

Since the edges of covering materials 5 and 6 are the sealing regions, the positional relations between sealant 51 and 52 and covering materials 5 and 6 are the same on the positive electrode side and negative electrode side, and as a result, the position within the areas of cup 61 of covering materials 5 and 6 of laminated electrode unit 2a, and in particular, that of positive electrode material applied portion 12 in positive collector 11 is biased toward the negative electrode lead 4 side. Because the edges of negative electrode sheets 20 are more difficult to bend on the positive electrode lead 3 side than on the negative electrode lead 4 side as previously explained, the overall outer shape of battery element 2 can be considered as a flat portion that extends as far as the negative electrode edges on the positive electrode lead 3 side with the border of the flat portion dropping precipitously on the negative electrode lead 4 side but assuming a more gradual slope on the positive electrode lead 3 side. In this way, the position of laminated electrode unit 2a is biased toward the negative electrode side to facilitate matching of the flat portion of the outer form of battery element 2 with bottom surface 61 a of cup 61 of covering materials 5 and 6. The occurrence of wrinkling that is caused during vacuum-sealing by mismatching of the shape of the contents of covering materials 5 and 6 and the shape of the covering materials can thus be suppressed. This merit is particularly effective when using covering materials 5 and 6 that have an inverted symmetrical shape on the positive electrode side and negative electrode side as shown in FIG. 4.

The processing of cup 61 on covering materials 5 and 6 can be realized by deep-draw forming. The border portion between bottom surface 61a and side surface 61 b of cup 61 is slightly curved due to the shape of the punch at this time. Accordingly, if the curved portion of this cup 61 is taken into consideration when positioning battery element 2 in cup 61, the flat portion of battery element 2 is preferably set so as to be positioned on the inner side of the curved portion of the border between bottom surface 61 a and side surface 61b of cup 61. In the foregoing explanation, a representative embodiment of the present invention was described. This description is next supplemented by an explanation of the configurations of each part of a laminated battery in which the present invention can be applied.

**Electrode Leads**

As the material of the positive electrode lead and negative electrode lead, aluminum, copper, nickel, titanium, iron, phosphor bronze, brass, stainless steel, nickel-plated copper, and nickel-plated aluminum may be used, and an annealing process may be applied as necessary. The thickness of the leads is preferably 0.08-1.0 mm.

In addition, a surface treatment is preferably applied to at least those portions of the leads that are in close contact with the covering material to improve adhesion with the covering material. Such a surface treatment may take the form of: surface roughening realized by a chemical etching treatment; an oxide film treatment realized by electrolytic formation; formation of a coating composed of partially aminated phenol polymer, a phosphorylated compound, and a titanium compound; a corrosion-resistant coating foundation treatment realized by a zinc phosphate coating; and a surface treatment realized by, for example, a titanium coupling agent or aluminate coupling agent.

A resin film that contains a metal-adhesive resin is preferably fused to the leads in advance. A substance that adheres to the surfaces of the lead terminals, which are metal plates, is employed as the metal-adhesive resin, examples of such a substance including: acid modified polypropylene, acid modified polyethylene, acid modified poly (ethylene-propylene) copolymer, or ionomer.

Covering Material

As the covering material, no particular limitations are imposed on the material used as long as the material is flexible and can cover the battery main element such that electrolyte does not leak. One material that is particularly preferable as the covering material is a laminated film in which a metal layer and a heat-sealable resin layer are laminated. In one example that can be offered as this type of laminated film, heat-sealable resin is applied to a thickness of 3 $\mu$m-200 $\mu$m to a metal foil having a thickness of 10 $\mu$m-100 $\mu$m. Examples of materials that can be offered as the material of the metal foil include: aluminum, titanium, titanium alloy, iron, stainless steel, and magnesium alloy. Materials that can be used as the heat-sealable resin include: polypropylene, polyethylene, acid modified products of these materials, polyesters such as polyphenylene sulfide, polyethylene terephthalate, polyamide, and ethylene-vinyl acetate copolymer.

The cup that forms the housing of the battery element may be formed on the covering material on both surfaces in the direction of thickness of the battery element, or may be formed on only one surface. Alternatively, a configuration may also be adopted in which the battery element is sealed not by forming a cup in the covering material, but by taking advantage of the flexibility of the covering material. In this case, the covering material is deformed to conform to the outer form of the battery element.

Positive Electrodes and Negative Electrodes

Regarding the positive electrode, no particular limitations are imposed as long as the positive electrode is an element that absorbs positive ions or that emits negative ions during discharge, and a material that is known as a conventional material for the positive electrode in a secondary battery can be used, examples of which include:

a) $LiMnO_2$, $LiMn_2O_4$, $LiCoO_2$, $LiNiO_2$, or a metal oxide such as lithium manganate that has a spinel structure;
b) a conductive polymer such as polyacetylene or polyaniline;
c) a disulfide compound represented by the general formula (R-Sm)n (where R is an aliphatic or aromatic, S is sulfur, and m and n are integers such that m $\geq$ 1 and n $\geq$ 1) (such as dithioglycol; 2, 5-dimercapto-1; 3 4-thiadiazole; S-triazine-2, and 4, 6-tritiole).

In addition, a positive electrode active material (not shown in the figure) can be formed in the positive electrode by mixing with a suitable binder or functional agent. Materials that can be used as the binder include halogen-containing polymers such as polyvinylidene fluoride. Materials that can be used as the functional material include: conductive polymers such as acetylene black, polypyrrole, and polyaniline for ensuring electron conductivity; polymer electrolytes for ensuring ion conductivity; and compounds of these polymers.

Regarding the material of the negative electrode, no particular limitations are imposed as long as the material is capable of occluding and discharging cations. Materials that can be used include natural graphite, crystalline carbon such as graphitized carbon that is obtained by subjecting coal/petroleum pitch to a high-temperature heat treatment; or amorphous carbon that is obtained by subjecting coal, petroleum pitch coke, or acetylene pitch coke to a heat treatment.

As the electrolyte that is impregnated in the battery element, examples may be offered in which salts that are composed of the cations of alkali metals such as lithium, potassium, and sodium and the anions of compounds that contain halogen such as $ClO_4^-$, $BF_4^-$, $PF_6^-$, $CF_3SO_3^-$, $(CF_3SO_2)_2N^-$, $(C_2F_5SO_2)_2N^-$, $(CF_3SO_2)_3C^-$, and $(C_2F_5SO_2)_3C^-$ are dissolved in a basic solvent having a high polarity and that can be used as the electrolyte of a secondary battery, such as ethylene carbonate, propylene carbonate, dimethyl carbonate, diethyl carbonate, methyl ethyl carbonate, $\gamma$-butyrolactone, N,N'-dimethyl formamide, dimethyl sulfoxide, N-methyl pyrrolidone, and m-cresol. Further, an electrolytic salt or solvent that is composed of these basic solvents can be used individually or in combination. Still further, an electrolyte in gel form in which a polymer gel contains an electrolytic solution may also be used. Finally, it is also possible to add trace amounts of materials such as sulfolane; dioxane; dioxolane; 1, 3-propane sultone; tetrahydrofuran; and vinylene carbonate.

The above-described materials relate to a lithium-ion secondary battery, but the present invention may also be applied to a lead battery, a nickel-cadmium battery, and a nickel-hydrogen battery. The present invention can be applied not only to batteries, but also to electric double-layer capacitors and nonaqueous electrolytic capacitors.

Explanation next regards actual working examples of the invention.

**Example 1**

A positive electrode mixture containing lithium manganate powder having a spinel structure is applied by means of a doctor blade to both surfaces of aluminum foil having a thickness of 20 $\mu$m that is to serve as a positive collector, whereby the overall thickness becomes 125 $\mu$m. When applying the positive electrode mixture, a non-applied portion (a portion in which the positive collector is exposed) is also formed by intermittent application of the positive electrode mixture, this application being realized by opening and closing a shutter. This assembly is cut into positive electrode sheets having a rectangular shape that measures, including the portion in which the positive electrode mixture is not applied, 137 mm x 65 mm. Thirty-two positive electrode sheets that are obtained in this way are prepared. The size of the positive electrode material applied portion is 120 mm x 65 mm, and the area is 7800 mm$^2$. The lead-out length of the portion in which the positive electrode mixture is not applied is 17 mm at this stage, but as will later be explained, this portion is uniformly cut after formation of the laminated electrode body and will therefore be shorter.

A negative electrode mixture that contains amorphous carbon powder is applied by means of a doctor blade to both surfaces of copper foil that is to be the negative collector and that has a thickness of 10 $\mu$m, whereby the overall thickness reaches 115 $\mu$m. This assembly is cut into negative electrode sheets having a rectangular shape that measures, including the portion in which the negative electrode mixture is not applied, 137 mm x 69 mm. Thirty-three negative electrode sheets that have been obtained in this way are prepared. The size of the negative electrode material applied portion is 124 mm x 69 mm, and the area of this portion is 8556 mm$^2$. The lead-out length of the portion in which the negative electrode mixture is not applied is 13 mm at this stage, but as will be explained later, the sheets are uniformly cut after formation of the laminated electrode body and will therefore be shorter.

The positive electrode sheets and negative electrode sheets that have been prepared as described above are alternately stacked with interposed separators, these separators each being composed of a microporous film made from polypropylene and having a thickness of 25 $\mu$m, such that the outermost layers are negative electrode sheets, whereby a laminated electrode body is obtained. When laminating the positive electrode sheets and negative electrode sheets, the directions of the positive electrode sheets and the negative electrode sheets are arranged such that the portions in which the positive electrode mixture has not been applied and the portions in which the negative electrode mixture has not been applied are oriented toward opposite sides. The dimensional design and positioning of the separators is realized such that the separators protrude 2 mm on each of the four edges from the area in which the negative electrode material has been applied.

Before connecting the non-applied portions of the positive electrodes with the positive electrode lead and the non-applied portions of the negative electrodes with the negative electrode lead, the non-applied portions of the positive and negative electrodes are each gathered together at the respective intended connection points and held down by a clip. In this state, the non-applied portions of the positive electrode sheets are collectively cut all together and aligned at the position at which the lead-out distance, for the center in the direction of lamination of the positive electrode sheets, is 12.5 mm, the lead-out distance being measured from the edge of the portion in which the positive electrode mixture has been applied. The negative electrode sheets are similarly collectively severed and thus aligned at the position at which the lead-out distance is 8.5 mm from the edge of the portion in which the negative electrode mixture has been applied for the center in the direction of lamination of the negative electrode sheets.

Next, the portions to which the positive electrode material has not been applied of the 32 positive electrode sheets are collected on an aluminum plate having a thickness of 0.1 mm that is to be the positive electrode lead, a horn is placed to the positive electrode material non-applied portion side, and ultrasonic welding is carried out. Similarly, the portions to which the negative electrode material has not been applied of the 33 negative electrode sheets are collected together on a nickel plate having a thickness of 0.1 mm that is to be the negative electrode lead, a horn is brought to the negative electrode material non-applied portion side, and ultrasonic welding is carried out. Next, a sealant composed of modified polypropylene is heat-sealed to the positive electrode lead and the negative electrode lead.

Regarding the dimensions of each part in FIG. 2 and FIG. 3, a = 5.5 mm, b = 8.5 mm, p = 6.5 mm, c = 6.5 mm, and d = 5.5 mm. The length of positive electrode junction 2b in the direction of lead-out of the lead is 12.5 mm, and the length of negative electrode junction 2c is 10.5 mm (of this dimension, the negative electrode mixture has been applied to 2 mm). Effective welding of the positive electrode sheets (aluminum foil) and the negative electrode sheets (copper foil) to the positive electrode lead and negative electrode lead, respectively, was realized without breaks in the foil. In addition, after welding, the lead-out side of portions in which the negative electrode material was not applied (hereinbelow referred to as simply "negative electrode side") in the vicinity of the border with the portion in which the negative electrode was applied curves in the direction of the portion that is welded to the negative electrode lead.

For the sake of comparison, a sample was tested in which the dimension of b was made smaller than the above-described value, and it was found that the aluminum foil was more prone to breakage.

The above-described laminated electrode body containing an electrolyte was next housed within covering materials having the outer form shown in FIG. 4 (a shape that is symmetrical on the positive and negative electrode sides) and then vacuum-sealed. The covering materials were laminated films of an aluminum layer having a thickness of 40 $\mu$m and a polypropylene resin layer having a thickness of 40 $\mu$m that was formed in cup shape by deep-draw forming. Regarding the relative positions of the covering materials and the laminated electrode body, the laminated electrode unit was biased toward the negative electrode side while the position of the sealant, taking the covering materials as a reference, was matched to the same position on the positive electrode side as on the negative electrode side, as shown in FIG. 4. The spacing from the positive electrode material applied portions to the end of the cup bottom surface of the covering was 4 mm on the positive electrode side and 2 mm on the negative electrode side. Appropriate determination of the depth of the cup enabled a smooth outer surface without the occurrence of wrinkles in the covering material even in vacuum-sealing.

When vacuum-sealing was performed using the same covering materials with the positional relations arranged such that the above-described spacing on both the positive electrode side and negative electrode side was 3 mm, wrinkling occurred in the covering material in the vicinity of the four corners.

**Claims**

1. A laminated battery, comprising:

a battery element in which: a plurality of positive electrode sheets that are each composed of positive electrode collector in which a positive electrode material is applied to both surfaces, and moreover, in which a portion to which positive electrode material has not been applied extends from one side; and a plurality of negative electrode sheets that are each composed of a negative electrode collector in which a negative electrode material has been applied to both surfaces over an area that is greater than that of said positive electrode material, and moreover, in which a portion to which the negative electrode material has not been applied extends from one side; are alternately stacked with interposed separators;
a positive electrode lead that is connected to the ends of stacked portions of said positive electrode sheets to which positive electrode material has not been applied; and
a negative electrode lead that is connected to the ends of stacked portions of said negative electrode sheets to which negative electrode material has not been applied;

wherein:

at least one portion on the side of the connection unit with said negative electrode lead of the portions of said negative electrode sheets that extend beyond the portions in which positive electrode material has been applied is curved toward said connection unit; and moreover:

$$c < b$$

where "b" is the spacing from the edges of the portions of said positive electrode sheets to which positive electrode material has been applied on the side of the connection unit with said positive electrode lead to the connection unit with said positive electrode lead; and "c" is the spacing from the edges of said positive electrode sheets on the side of the connection unit with said negative electrode lead to the connection unit with said negative electrode lead.

2. A laminated battery according to claim 1, wherein:

$$0.8\,p < c < 1.2\,p$$

where "p" is the spacing, on the side of the connection unit with said positive electrode lead, from the edges of said negative electrode sheets to the connection unit of said positive electrode sheets and said positive electrode lead.

3. A laminated battery according to claim 1, wherein said positive electrode collectors are aluminum foil and said negative electrode collectors are copper foil.

4. A laminated battery according to claim 1, wherein said positive electrode sheets and said negative electrode sheets are laminated such that the portions to which positive electrode material has not been applied and the portions to which negative electrode material has not been applied extend from opposite sides.

5. A laminated battery according to claim 4, wherein said battery element is vacuum-sealed inside covering material that is composed of film and in which a cup has been formed for forming a housing for accommodating said battery element; and moreover, the region of said positive electrode collectors to which the positive electrode material has been applied is arranged with a bias toward said negative electrode lead inside said cup.

**Patentansprüche**

1. Laminierte Batterie, umfassend:

ein Batterieelement, in dem: eine Mehrzahl positiver Elektrodenfolien, die jeweils aus einem positiven Elektrodenkollektor bestehen, in dem ein positives Elektrodenmaterial auf beide Oberflächen aufgebracht ist, und in dem sich darüber hinaus ein Abschnitt, auf den kein positives Elektrodenmaterial aufgebracht wurde, von einer Seite erstreckt; und eine Mehrzahl negativer Elektrodenfolien, die jeweils aus einem negativen Elektrodenkollektor bestehen, in dem ein negatives Elektrodenmaterial über einen Bereich, der größer als der des positiven Elektrodenmaterials ist, auf beide Oberflächen aufgebracht wurde, und in dem sich darüber hinaus ein Abschnitt, auf den kein negatives Elektrodenmaterial aufgebracht wurde, von einer Seite erstreckt; abwechselnd mit dazwischen liegenden Trennelementen übereinander angeordnet sind;

einen positiven Elektrodenanschluss, der mit den Enden von übereinander angeordneten Abschnitten der positiven Elektrodenfolien verbunden ist, auf die kein positives Elektrodenmaterial aufgebracht wurde; und

einen negativen Elektrodenanschluss, der mit den Enden von übereinander angeordneten Abschnitten der negativen Elektrodenfolien verbunden ist, auf die kein negatives Elektrodenmaterial aufgebracht wurde;

wobei

mindestens ein auf der Seite der Verbindungseinheit mit dem negativen Elektrodenanschluss befindlicher Abschnitt der Abschnitte der negativen Elektrodenfolien, die sich über die Abschnitte hinaus erstrekken, in denen positives Elektrodenmaterial aufgebracht wurde, auf die Verbindungseinheit hin gekrümmt ist; und wobei darüber hinaus:

$$c < b \quad ,$$

wobei "b" der Abstand von den Rändern der Abschnitte der positiven Elektrodenfolien, auf die positives Elektrodenmaterial aufgebracht wurde, auf der Seite der Verbindungseinheit mit dem positiven Elektrodenanschluss zur Verbindungseinheit mit dem positiven Elektrodenanschluss ist; und "c" der Abstand von den Rändern der positiven Elektrodenfolien auf der Seite der Verbindungseinheit mit dem negativen Elektrodenanschluss zur Verbindungseinheit mit dem negativen Elektrodenanschluss ist.

2. Laminierte Batterie nach Anspruch 1, wobei

$$0,8\,p < c < 1,2\,p \quad ,$$

wobei "p" auf der Seite der Verbindungseinheit mit dem positiven Elektrodenanschluss der Abstand von den Rändern der negativen Elektrodenfolien zur Verbindungseinheit der positiven Elektrodenfolien und des positiven Elektrodenanschlusses ist.

3. Laminierte Batterie nach Anspruch 1, wobei die positiven Elektrodenkollektoren aus Aluminiumfolie und die negativen Elektrodenkollektoren aus Kupferfolie bestehen.

4. Laminierte Batterie nach Anspruch 1, wobei die positiven Elektrodenfolien und die negativen Elektrodenfolien so laminiert sind, dass sich die Abschnitte, auf die kein positives Elektrodenmaterial aufgebracht wurde, und die Abschnitte, auf die kein negatives Elektrodenmaterial aufgebracht wurde, von entgegen gesetzten Seiten erstrecken.

5. Laminierte Batterie nach Anspruch 4, wobei das Batterieelement in einem Überzugmaterial vakuumabgedichtet ist, das aus Film besteht und in dem eine Schale zum Bilden eines Gehäuses zur Aufnahme des Batterieelements gebildet wurde; und wobei darüber hinaus der Bereich der positiven Elektrodenkollektoren, auf die das positive Elektrodenmaterial aufgebracht wurde, mit einer Neigung auf den negativen Elektrodenanschluss in der Schale hin angeordnet ist.

**Revendications**

1. Batterie stratifiée, comprenant :

un élément de batterie dans lequel : une pluralité de feuilles d'électrode positive qui sont composées chacune d'un collecteur d'électrode positive dans lequel un matériau d'électrode positive est appliqué aux deux surfaces, et de plus, dans lequel une partie à laquelle le matériau d'électrode positive n'a pas été appliqué s'étend à partir d'un côté ; et une pluralité de feuilles d'électrode négative qui sont composées chacune d'un collecteur d'électrode négative dans lequel un matériau d'électrode négative a été appliqué aux deux surfaces sur une zone qui est plus grande que celle dudit matériau d'électrode positive, et de plus, dans lequel une partie à laquelle le matériau d'électrode négative n'a pas été appliqué s'étend à partir d'un côté ; sont empilées alternativement en interposant des séparateurs ;

un conducteur d'électrode positive qui est connecté aux extrémités des parties empilées desdites feuilles d'électrode positive auxquelles le matériau d'électrode positive n'a pas été appliqué ; et

un conducteur d'électrode négative qui est connecté aux extrémités des parties empilées desdites feuilles d'électrode négative auxquelles le matériau d'électrode négative n'a pas été appliqué ;

dans laquelle :

au moins une partie du côté de l'unité de connexion avec ledit conducteur d'électrode négative des parties desdites feuilles d'électrode négative qui s'étendent au-delà des parties dans lesquelles le matériau d'électrode positive a été appliqué est incurvée vers ladite unité de connexion ; et de plus :

$$c < b$$

où « b » est l'espacement des bords des parties desdites feuilles d'électrode positive auxquelles le matériau d'électrode positive a été appliqué du côté de l'unité de connexion avec ledit conducteur d'électrode positive jusqu'à l'unité de connexion avec ledit conducteur d'électrode positive ; et « c » est l'espacement des bords desdites feuilles d'électrode positive du côté de l'unité de connexion avec ledit conducteur d'électrode négative jusqu'à l'unité de connexion avec ledit conducteur d'électrode négative.

2. Batterie stratifiée selon la revendication 1, dans laquelle :

$$0,8\ p < c < 1,2\ p$$

où « p » est l'espacement, du côté de l'unité de connexion avec ledit conducteur d'électrode positive, des bords desdites feuilles d'électrode négative jusqu'à l'unité de connexion desdites feuilles d'électrode positive et dudit conducteur d'électrode positive.

3. Batterie stratifiée selon la revendication 1, dans laquelle lesdits collecteurs d'électrode positive sont une feuille d'aluminium et lesdits collecteurs d'électrode négative sont une feuille de cuivre.

4. Batterie stratifiée selon la revendication 1, dans laquelle lesdites feuilles d'électrode positive et lesdites feuilles d'électrode négative sont stratifiées de sorte que les parties auxquelles le matériau d'électrode positive n'a pas été appliqué et les parties auxquelles le matériau d'électrode négative n'a pas été appliqué s'étendent à partir de côtés opposés.

5. Batterie stratifiée selon la revendication 4, dans laquelle
ledit élément de batterie est scellé sous vide à l'intérieur d'un matériau de recouvrement qui est composé d'un film et dans lequel une cuvette a été formée pour former un logement pour recevoir ledit élément de batterie ; et de plus, la région desdits collecteurs d'électrode positive à laquelle le matériau d'électrode positive a été appliqué est agencée avec une inclinaison vers ledit conducteur d'électrode négative à l'intérieur de ladite cuvette.

Fig. 1

Fig. 2

Fig. 3

EP 1 530 246 B1

EP 1 530 246 B1

61b    5, 6    2a    61    61b

51

52

61a

← POSITIVE SIDE    a+b

c+d    NEGATIVE SIDE →

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001126678 A
- EP 1333520 A